# FASCICULE DE BREVET EUROPEEN

(11) **EP 3 394 837 B1**
(45) Date de publication et mention de la délivrance du brevet: **05.02.2020**
(21) Numéro de dépôt: 16812777.7
(22) Date de dépôt: 20.12.2016
(51) Int. Cl.: G07C 5/08, B64D 45/00, B64F 5/60

(54) **PROCÉDÉ DE SURVEILLANCE DU VIEILLISSEMENT D'UN TRAIN D'ATTERRISSAGE D'UN AÉRONEF**
VERFAHREN ZUR ÜBERWACHUNG DER ALTERUNG EINES LUFTFAHRZEUGFAHRWERKS
AIRCRAFT LANDING GEAR AGEING MONITORING METHOD

(30) Priorité: 21.12.2015 FR 1562913
(43) Date de publication de la demande: 31.10.2018
(73) Titulaire: Safran Electronics & Defense, 92100 Boulogne-Billancourt (FR); Safran Landing Systems, 78140 Vélizy-Villacoublay (FR)
(72) Inventeur: VINSON, Garance, 78140 Velizy Villacoublay (FR); FANTON, Nicolas, 92100 Boulogne-billancourt (FR); TINE, Pierre-Jean, 92100 Boulogne-billancourt (FR); VITRY, Sully, 92100 Boulogne-billancourt (FR); LOUSTAUDAUDINE, Christophe, 92100 Boulogne-billancourt (FR)
(74) Mandataire: Regimbeau
(86) Numéro de dépôt international: PCT/EP2016/082013
(87) Numéro de publication internationale: WO 2017/108848

(56) Documents cités:
- WO-A1-2008/110836
- US-A1- 2006 106 582
- US-A1- 2009 210 173
- US-A1- 2012 095 703
- US-A1- 2013 030 614
- US-B1- 8 042 765
- TRUMMER C ET AL: "Verification methodology for battery lifetime requirements of higher class UHF RFID tags", IEEE INTERNATIONAL CONFERENCE ON RFID, 2009, 27 avril 2009 (2009-04-27), pages 170-177, XP031573171, IEEE, PISCATAWAY, NJ, USA ISBN: 978-1-4244-3337-7

## Description

### DOMAINE TECHNIQUE GENERAL

L'invention concerne le domaine de la surveillance du vieillissement d'un aéronef.

Elle a plus particulièrement pour objet un procédé de surveillance du vieillissement d'un train d'atterrissage d'un aéronef à l'aide d'un dispositif de mesure autonome.

### ETAT DE LA TECHNIQUE

Les composants des trains d'atterrissage d'un aéronef sont soumis à d'importantes contraintes mécaniques lors d'un atterrissage. De telles contraintes entrainent un vieillissement qui peut aller jusqu'à une rupture ou une incapacité de ces composants à assurer leur fonction lors d'un atterrissage. La vie des passagers de l'aéronef peut alors être mise en danger si un tel vieillissement n'est pas contrôlé de façon à déclencher une opération de maintenance avant que celui-ci ne devienne critique.

Dans une première approche il est possible de comptabiliser un nombre d'atterrissages effectués par un aéronef depuis sa mise en service et de déclencher une opération de maintenance préventive lorsque ce nombre d'atterrissages a dépassé une limite au-delà de laquelle il devient impossible de garantir que les trains d'atterrissage de l'aéronef continueront à assurer correctement leur fonction. Néanmoins, une telle méthode de surveillance présente le défaut de ne comptabiliser que les atterrissages de l'aéronef et non ceux des trains d'atterrissage de celui-ci. Ces nombres peuvent être différents du fait d'une pratique courante consistant à réutiliser sur un aéronef les trains d'atterrissage provenant d'un autre aéronef, par exemple après la mise à la retraite de celui-ci. A défaut d'une traçabilité précise du devenir de chaque train d'atterrissage, le nombre d'atterrissages, et donc le vieillissement, d'un train d'atterrissage risque d'être sous-estimé. Par ailleurs une telle méthode est incapable de déterminer l'impact exact de chaque atterrissage sur les composants d'un train d'atterrissage. Un tel impact peut en effet être très variable en fonction de la dureté de l'atterrissage.

Afin de prendre en compte de façon plus précise l'impact de chaque atterrissage sur les composants d'un train d'atterrissage, des procédés de surveillance existants proposent d'installer des capteurs sur le ou les trains d'atterrissage d'un aéronef et de mesurer des paramètres physiques des atterrissages subis par ces trains, tels que les accélérations subies par les composants des trains lors des atterrissages.

De telles méthodes présentent néanmoins l'inconvénient majeur de nécessiter le branchement de ces capteurs sur le système avionique de l'aéronef. Ces capteurs nécessitent en effet d'être alimentés électriquement, et un système de traitement est nécessaire pour traiter et mémoriser les signaux issus de ces capteurs. Au moins une interface de communication de l'aéronef doit également être mise à contribution afin d'extraire ces mesures du système de l'avion pour les transférer dans le système informatique de la société chargée de la maintenance de l'aéronef. Outre son inconvénient en termes d'encombrement, un tel branchement de ces capteurs sur le système avionique de l'aéronef nécessite une certification poussée, et donc couteuse, de tels composants afin de justifier de l'absence d'impact sur le bon fonctionnement du reste du système informatique de l'aéronef.

Le document WO 2008/110836 A1 décrit un procédé de surveillance du vieillissement d'un train d'atterrissage d'un aéronef mis en œuvre par un dispositif de mesure autonome monté sur ledit train d'atterrissage et comprenant un capteur pour mesurer des paramètres physiques relatifs au vieillissement du train d'atterrissage et un capteur pour détecter la position du train d'atterrissage et l'atterrissage de l'aéronef, une mémoire de stockage pour stocker des mesures relatives au vieillissement du train d'atterrissage fonction desdits paramètres physiques mesurés. Le capteur d'initiation d'événement d'atterrissage peut comprendre un commutateur d'inclinaison mais il peut également comprendre un accéléromètre. Le plus préférablement, il comprendra un capteur à trois axes qui fournit une sortie indicative de l'orientation de l'appareil en trois dimensions. Le processeur peut échantillonner la sortie du capteur lorsque le train d'atterrissage est dans la position stockée et également lorsqu'il est en position basse et stocker ces valeurs en mémoire. La sortie du capteur à trois axes est filtrée pour éliminer les variations causées par le mouvement normal de l'avion ou les vibrations. Lorsque l'avion décolle, le capteur de déploiement de train détectera l'arrimage du train, de sorte que le module reviendra en mode vol. Lorsque le train est déployé pour atterrir, un "capteur de déploiement de train d'atterrissage" s'active et le module de détection se préparera pour atterrir. Après un délai nominal d'environ 1,5 minute pour permettre l'approche de la piste, le dispositif commencera à enregistrer le niveau de contrainte dans le composant surveillé. Lors de l'atterrissage, la valeur maximale de la contrainte ainsi que le temps écoulé depuis le CCF seront mémorisés. Une fois que la contrainte a atteint un certain seuil, le dispositif saura qu'un atterrissage s'est produit et s'éteindra après un délai donné pour économiser la batterie. Si l'atterrissage ne se produit pas dans un certain délai après le déploiement de l'engrenage (par exemple, si l'atterrissage est interrompu), l'appareil s'éteindra également.

Il existe donc un besoin d'un procédé de surveillance autonome du vieillissement d'un train d'atterrissage d'un aéronef permettant un suivi détaillé des contraintes subies par celui-ci lors d'atterrissages successifs, ne nécessitant pas d'être relié au système avionique de l'aéronef et ne nécessitant aucune intervention humaine durant la période de plusieurs années entre deux opérations majeures de maintenance.

### PRESENTATION DE L'INVENTION

La présente invention se rapporte selon un premier aspect à un procédé de surveillance du vieillissement d'un train d'atterrissage d'un aéronef mis en œuvre par un dispositif de mesure autonome monté sur ledit train d'atterrissage et comprenant :
- au moins un capteur configuré pour mesurer des paramètres physiques relatifs au vieillissement du train d'atterrissage et au moins un capteur configuré pour détecter la position du train d'atterrissage et l'atterrissage de l'aéronef,
- une mémoire de stockage pour stocker des mesures relatives au vieillissement du train d'atterrissage fonction desdits paramètres physiques mesurés,
   ledit procédé de surveillance comprenant :
   ∘ après un atterrissage de l'aéronef, une étape d'attente (« STAND BY ») comprenant une détection à l'aide desdits capteurs de la position du train d'atterrissage à une première fréquence d'échantillonnage tant que la position du train d'atterrissage est détectée comme verticale,
   ∘ après détection d'une position horizontale du train d'atterrissage, une étape de sommeil (« SLEEP ») comprenant une détection à l'aide desdits capteurs de la position du train d'atterrissage à au moins une deuxième fréquence d'échantillonnage, tant que la position du train d'atterrissage est détectée comme horizontale,
   ∘ après détection d'une position verticale du train d'atterrissage, une étape de mesure (« AWAKE ») comprenant à l'aide desdits capteurs une acquisition de paramètres physiques relatifs au vieillissement du train d'atterrissage et une détection d'un atterrissage de l'aéronef jusqu'à expiration d'un délai prédéterminé après qu'un atterrissage a été détecté,
ledit procédé de surveillance comprenant en outre un stockage (« STORAGE ») dans ladite mémoire de stockage de mesures relatives au vieillissement du train d'atterrissage fonction desdits paramètres physiques mesurés.

Lors de l'étape de mesure (« AWAKE »), l'acquisition et la détection sont mises en œuvre à une troisième fréquence d'échantillonnage, cette fréquence étant supérieure à la (ou aux) deuxième(s) fréquence(s) d'échantillonnage, ladite (ou lesdites) deuxième(s) fréquence(s) étant supérieure(s) à ladite (audites) première(s) fréquence(s). Cette troisième fréquence est adaptée à une observation de phénomènes vibratoires par les capteurs lors de l'étape de mesure (« AWAKE »).
Notamment, les paramètres physiques relatifs au vieillissement du train d'atterrissage sont acquis pour différents pics de sollicitations successifs et/ou plusieurs séquences vibratoires successives,

Egalement, les acquisitions de paramètres physiques sont converties en nombre de cycles de vieillissement, les nombres de cycles de vieillissement ainsi obtenus étant sommés, la somme de ces cycles étant comparée à un seuil pour déclenchement éventuel d'une alerte.

Un tel procédé permet de surveiller le vieillissement du train d'atterrissage d'un aéronef de manière détaillée tout en minimisant la consommation énergétique du dispositif de mesure afin de permettre un fonctionnement sur batterie sur une longue durée.

L'étape de mesure (« AWAKE ») du procédé selon le premier aspect comprend en outre une détection à la troisième fréquence d'échantillonnage de la position du train d'atterrissage et ladite étape de mesure peut être mise en œuvre jusqu'à la détection d'une position horizontale du train d'atterrissage.

Ceci permet d'interrompre l'étape de mesure lorsque celle-ci n'est finalement pas suivie d'un atterrissage, par exemple en cas de report de l'atterrissage ou d'ouverture erronée du train d'atterrissage.

Les paramètres physiques relatifs au vieillissement du train d'atterrissage peuvent comprendre les déformations statique et dynamique de pièces structurelles de l'aéronef, les accélérations de composants du train d'atterrissage, les pressions et températures des pneus de l'aéronef, les pressions et températures des amortisseurs de l'aéronef, la course de l'amortisseur de l'aéronef.

Le vieillissement du train d'atterrissage peut ainsi être estimé de manière détaillée en prenant en compte plusieurs processus de vieillissement, intervenant sur différentes pièces du train d'atterrissage.

Lesdits capteurs peuvent détecter la position du train d'atterrissage et l'atterrissage de l'aéronef à partir de mesures des accélérations subies par le train d'atterrissage.

La position du train d'atterrissage et l'atterrissage de l'aéronef peuvent ainsi être détectés à l'aide d'un seul et même capteur, améliorant la compacité du dispositif.

Les mesures relatives au vieillissement du train d'atterrissage peuvent comprendre un nombre d'atterrissages violents dits durs, et de sollicitations mécaniques subies par le train du fait de sorties de pistes ou de rebonds, au cours desquels l'accélération du train d'atterrissage a dépassé un seuil prédéterminé, sur au moins un des trois axes d'atterrissage lors d'au moins un atterrissage passé ainsi qu'un nombre d'atterrissages.

De telles mesures permettent de caractériser efficacement le vieillissement du train d'atterrissage de manière synthétique, sans nécessiter le stockage de l'ensemble des paramètres physiques mesurés.

Le procédé selon le premier aspect peut comprendre en outre la mise en œuvre de l'étape d'attente lorsque la durée de mise en œuvre de l'étape de mesure atteint une durée maximale prédéterminée.

Ceci permet d'interrompre une étape d'attente inutile et d'éviter un gaspillage des ressources du dispositif.

Le procédé selon le premier aspect peut comprendre une étape d'hibernation (« OFF ») au cours de laquelle le dispositif détecte la réception d'une commande d'activation à une quatrième fréquence d'échantillonnage inférieure à ladite première fréquence et l'étape d'attente peut être mise en œuvre suite à la détection de ladite commande.

La consommation énergétique du dispositif de mesure peut ainsi être maintenue au minimum durant une longue période de stockage, tout en permettant une activation à distance sans interface mécanique, afin de garantir l'étanchéité du dispositif.

Lesdites mesures relatives au vieillissement du train d'atterrissage peuvent être obtenues par comparaison desdits paramètres physiques mesurés à un seuil prédéterminé ou à un profil étalon.

Une donnée synthétique caractérisant le vieillissement du train peut ainsi être obtenue à partir d'une quantité plus importante de paramètres physiques mesurés.

Ledit dispositif de mesure comprenant en outre une interface de communication, ledit procédé selon le premier aspect peut comprendre une étape de transmission desdites mesures relatives au vieillissement du train d'atterrissage stockées dans ladite mémoire de stockage à un terminal externe.

Les mesures peuvent ainsi être transmises à un dispositif externe, par exemple pour les exploiter dans le cadre d'un processus de maintenance.

Ledit dispositif de mesure peut par ailleurs ne transmettre lesdites mesures relatives au vieillissement du train d'atterrissage que durant l'étape d'attente.

Tout accès non autorisé aux données pendant les autres étapes, c'est-à-dire majoritairement durant le vol de l'aéronef, peut ainsi être empêché.

Selon un deuxième aspect, l'invention concerne un produit programme d'ordinateur comprenant des instructions de code pour l'exécution du procédé selon le premier aspect lorsque ce programme est exécuté par un processeur.

Selon un troisième aspect, l'invention concerne un dispositif de mesure autonome configuré pour être monté sur ledit train d'atterrissage et comprenant :
au moins un capteur configuré pour mesurer des paramètres physiques relatifs au vieillissement du train d'atterrissage et au moins un capteur configuré pour détecter la position du train d'atterrissage et l'atterrissage de l'aéronef,
une mémoire de stockage pour stocker des mesures relatives au vieillissement du train d'atterrissage fonction desdits paramètres physiques mesurés,
ledit dispositif étant configuré, une fois monté sur le train d'atterrissage, pour mettre en œuvre lesdits étapes du procédé de surveillance selon le premier aspect.

De tels capteurs peuvent être parmi ou une combinaison de capteurs gyroscopiques, d'accéléromètres, de jauges de contraintes, de capteurs de température, de pression, de jauges de déformation, de capteurs d'intensité lumineuse, de capteurs magnétiques, de capteurs de déplacements linéaires ou rotatifs.

Selon un quatrième aspect, l'invention concerne un système de surveillance comprenant le dispositif de mesure autonome selon le deuxième aspect et un terminal externe, ledit dispositif de mesure comprenant en outre une interface de communication configurée pour transmettre audit terminal externe les mesures relatives au vieillissement du train d'atterrissage stockées dans ladite mémoire de stockage.

Une telle interface de communication peut n'être activée que durant l'étape d'attente (« STAND BY »).

Une telle interface de communication peut par ailleurs être une interface RFID, NFC ou une interface de réseau cellulaire pour objets connectés.

De tels produits programmes d'ordinateur, dispositifs et systèmes présentent les mêmes avantages que ceux évoqués pour le procédé selon le premier aspect.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre un système de surveillance de train d'atterrissage selon un mode de réalisation de l'invention ;
- la figure 2 illustre un dispositif de mesure autonome selon un mode de réalisation de l'invention ;
- la figure 3 illustre schématiquement les différentes étapes du procédé de surveillance de train d'atterrissage selon un mode de mise en œuvre de l'invention;
- la figure 4 est un diagramme schématisant un exemple de mise en œuvre du procédé de surveillance de train d'atterrissage selon l'invention;
- les figures 5a et 5b illustrent une mise en œuvre de détection de la position d'un train d'atterrissage et/ou d'un atterrissage de l'aéronef par des capteurs à partir de mesures des accélérations subies par le train d'atterrissage.

### DESCRIPTION DETAILLEE

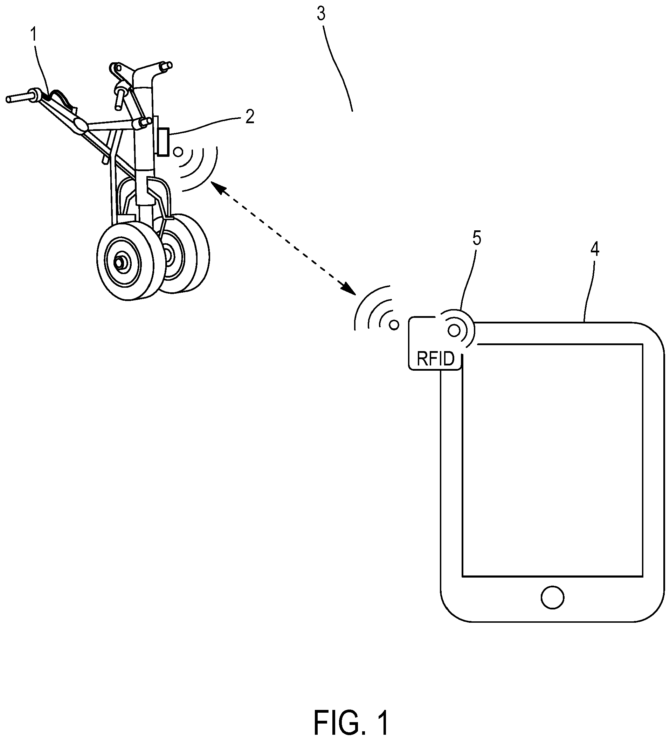

Un mode de mise en œuvre de l'invention concerne un procédé de surveillance du vieillissement d'un train d'atterrissage 1 d'un aéronef. Ce procédé est mis en œuvre par un dispositif de mesure autonome 2 configuré pour être monté sur le train d'atterrissage 1 de l'aéronef et compris dans un système de surveillance de train d'atterrissage 3, comme représenté en **figure 1****.**

Le procédé propose de surveiller le vieillissement du train d'atterrissage de l'aéronef 1 de manière à caractériser efficacement un tel vieillissement en instrumentant le train à l'aide du seul dispositif de mesure autonome 2 conçu pour réaliser une acquisition de divers paramètres physiques lors des atterrissages réalisés par le train d'atterrissage.

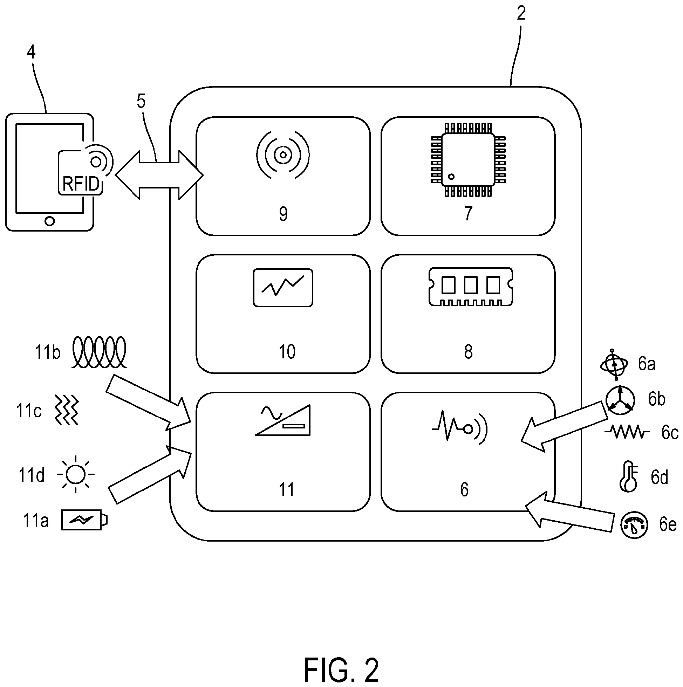

Pour cela, le dispositif de mesure autonome 2 comprend au moins un capteur 6 comme représenté en **figure 2****.** Le dispositif de mesure autonome comprend ainsi au moins un capteur configuré pour mesurer des paramètres physiques relatifs au vieillissement du train d'atterrissage et au moins un capteur configuré pour détecter la position du train d'atterrissage et l'atterrissage de l'aéronef. Ainsi selon une liste non exhaustive, de tels capteurs peuvent être des capteurs parmi ou une combinaison de capteurs gyroscopiques 6a pour mesurer les trois composantes du vecteur vitesse angulaire (vitesses de roulis, de tangage et de lacet), d'accéléromètres 6b pour mesurer les accélérations linéaires du train d'atterrissage dans trois directions orthogonales, de jauges de contraintes 6c, de capteurs de température 6d et de pression 6e atmosphériques, de jauges de déformation pour mesurer les déformations statique et dynamique de pièces structurelles de l'aéronef, de capteurs d'intensité lumineuse, de capteurs magnétiques, de capteurs de déplacements linéaires ou rotatifs.... De tels capteurs peuvent également être dédiés à la surveillance de composants particuliers du train. De tels capteurs peuvent alors par exemple mesurer la pression et la température des pneus ou des amortisseurs du train, ou encore la course des amortisseurs. La mesure de tels paramètres relatifs directement au train d'atterrissage permet de restituer complètement les sollicitations du train et ainsi de caractériser son vieillissement.

Le dispositif de mesure autonome peut également comprendre un processeur ou microprocesseur 7. Un tel processeur ou microprocesseur 7 peut être un processeur de type x-86 ou RISC, un contrôleur ou microcontrôleur, un DSP, un circuit intégré tel qu'un ASIC ou programmable tel qu'un FPGA, une combinaison de tels éléments. Ce processeur ou microprocesseur 7 est configuré pour piloter le fonctionnement des différents composants du dispositif de mesure autonome et pour traiter les paramètres physiques mesurés par les capteurs de celui-ci selon des traitements spécifiques.

Le dispositif de mesure autonome comprend également une mémoire de stockage 8, telle qu'une mémoire non volatile réinscriptible comme une mémoire flash ou une mémoire EEPROM, pour stocker des mesures relatives au vieillissement du train d'atterrissage fonction desdits paramètres physiques mesurés.

De telles mesures peuvent comprendre les paramètres physiques mesurés par les capteurs lors d'un ou plusieurs atterrissages et/ou le résultat d'un traitement spécifique par le processeur 7 des paramètres physiques mesurés. Un tel traitement spécifique peut comprendre la comparaison desdits paramètres physiques mesurés à un seuil prédéterminé ou à un profil étalon. Dans ce cas, les seuils prédéterminés et les profils étalons peuvent être stockés préalablement dans la mémoire de stockage 8. De telles mesures relatives au vieillissement du train d'atterrissage peuvent alors comprendre le nombre d'atterrissages violents, dits atterrissages durs (« hard landing ») et de sollicitations mécaniques subies par le train du fait de sorties de pistes ou de rebonds, au cours desquels l'accélération du train d'atterrissage a dépassé un seuil prédéterminé, sur au moins un des trois axes d'atterrissage lors d'au moins un atterrissage passé, ainsi que le nombre d'atterrissages subis par le train d'atterrissage, ou encore une accélération maximale sur au moins un des trois axes d'atterrissage lors d'au moins un atterrissage passé. Ces mesures peuvent ainsi permettre de quantifier l'impact des atterrissages, de détecter et quantifier l'impact des atterrissages durs, de quantifier l'impact d'éventuelles sorties de piste lors ou à la suite d'un atterrissage, et ainsi d'estimer l'état de fatigue du train d'atterrissage.

Le dispositif de mesure autonome peut également comprendre un gestionnaire d'énergie 10 gérant les modes de consommation électrique des composants du dispositif de mesure 2 et une source d'énergie 11 permettant d'alimenter électriquement ces composants. Une telle source d'énergie peut comprendre un ou plusieurs éléments parmi une batterie 11a, un convertisseur d'énergie par induction 11b, vibratoire 11c, solaire 11d, ou encore par gradient de température. Le dispositif de mesure autonome peut ainsi fonctionner de manière autonome sans nécessiter d'être relié au système électrique de l'aéronef.

Afin d'exploiter ces données dans le cadre d'un processus de surveillance ou de maintenance, il est nécessaire de pouvoir exporter ces données en dehors du dispositif de mesure autonome.

Pour cela, le système de surveillance de train d'atterrissage 3 peut également comprendre un terminal externe 4 auquel le dispositif de mesure autonome 2 peut être relié par l'intermédiaire d'une interface de communication 5 configurée pour transmettre audit terminal externe 4 les mesures relatives au vieillissement du train d'atterrissage stockées dans ladite mémoire de stockage 8. Les données exportées peuvent être accompagnées de données d'identification du train (P/N et S/N) pour permettre le suivi d'un train clairement identifié. Ces données d'identification sont stockées dans le système de surveillance 3 par exemple dans la mémoire de stockage 8. Afin de prévenir tout risque de panne d'alimentation électrique, le système de surveillance de train d'atterrissage 3 peut également transmettre un indicateur de son statut énergétique, par exemple un niveau de remplissage de sa batterie.

Le terminal externe 4 peut être un terminal mobile tel qu'une tablette ou un smartphone. Il peut être configuré pour récupérer les mesures relatives au vieillissement du train d'atterrissage stockées dans la mémoire de stockage 8 du dispositif de mesure autonome 2 et pour afficher ces mesures sur un écran d'affichage. Les mesures relatives au vieillissement du train d'atterrissage stockées dans ladite mémoire de stockage 8 peuvent ainsi être transmises, avec les données d'identification du train d'atterrissage le cas échéant, au terminal externe 4 à la fin de chaque vol une fois le vol terminé. Alternativement, la communication entre le terminal externe et le dispositif de mesure peut ne pas être établie à la fin de chaque vol de l'aéronef. La mémoire de stockage peut alors stocker des mesures relatives au vieillissement du train d'atterrissage correspondant à plusieurs vols de l'aéronef, par exemple depuis la dernière communication avec le terminal externe, et ces données peuvent transférées d'un seul coup au terminal externe avec les données d'identification du train d'atterrissage le cas échéant.

Une telle interface de communication peut être une interface filaire, telle qu'une liaison série RS232, USB, Ethernet. Alternativement une telle interface de communication peut être une liaison sans fil active telle qu'une liaison Wifi, Bluetooth LE, UMTS/3G, LTE/4G ou propriétaire adaptée aux spécificités du besoin. Lorsqu'une telle interface est de type sans fil, le dispositif de mesure autonome peut alors comprendre un émetteur/récepteur radio fréquence 9. Avantageusement, l'interface de communication peut être une liaison sans-fil passive de type RFID ou NFC ne nécessitant la fourniture d'aucune énergie par le dispositif de mesure lui-même. Afin de limiter la puissance d'émission de l'émetteur/récepteur 9 et donc sa consommation d'énergie par rapport à une liaison Wifi ou Bluetooth, l'interface de communication peut être une interface de réseau cellulaire pour objets connectés de type « Sigfox » ou « LoRa ».

Dans un mode de réalisation, le dispositif de mesure 2 peut comprendre un boitier principal comprenant le processeur 7, la mémoire de stockage 8, l'émetteur/récepteur 9, le gestionnaire d'énergie 10 et la source d'énergie 11. Le boitier principal peut également comprendre les capteurs 6 destinés à mesurer les mouvements généraux du train d'atterrissage, tels que gyroscopes et accéléromètres, ou à mesurer les paramètres relatifs à l'environnement du train d'atterrissage, tels que capteurs de température ou de pression atmosphérique. Un tel boitier principal peut être un boitier scellé rendu étanche pour le protéger des conditions extrêmes (pression, température, projections de fluides corrosifs, projections d'eau ...) pouvant être rencontrées en cours d'opérations (stockage, vol et parking).

Un tel boitier principal peut être relié aux capteurs du dispositif de mesure, dits capteurs distants, nécessitant d'être positionnés à des endroits particuliers distants de l'emplacement d'installation du boitier principal, tels que des capteurs de pression des pneus, de course d'un amortisseur ou encore des jauges de déformation des éléments mécaniques du train. Une telle liaison peut être une liaison filaire ou sans fil du même type que celle employée pour la communication avec le terminal externe. En cas d'utilisation d'une liaison sans-fil, le boitier principal peut employer son émetteur/récepteur radio fréquence 9 pour communiquer avec les capteurs distants. Ceux-ci doivent disposer par ailleurs d'une source d'énergie propre permettant leur alimentation électrique, telle qu'une batterie. Le boitier principal peut ainsi communiquer avec les capteurs distants sans interférer avec le réseau avionique de l'aéronef.

En particulier, le boitier principal peut communiquer avec de tels capteurs distants par le biais d'un réseau UNB (« Ultra Narrow Band ») tel que les réseaux « Sigfox » ou « LoRa » permettant de minimiser la consommation d'énergie des éléments en communication et de maintenir la puissance d'émissions électromagnétiques sous la limite maximum fixée par la réglementation DO160 section 21.

Les communications entre le boitier principal et les capteurs distants du dispositif de mesure, ou entre le dispositif de mesure et le terminal externe peuvent être sécurisées, par exemple en étant chiffrées, afin d'empêcher une compréhension de ces communications et une réécriture des informations contenues dans la mémoire par un tiers non autorisé.

Disposant à la fois de ses propres capteurs, de sa propre source d'énergie et de sa propre interface de communication, le dispositif de mesure peut ainsi fonctionner de manière complètement autonome sans aucune interface physique avec le réseau électrique ou le réseau de communication de l'aéronef. Un tel dispositif est ainsi plus simple et soumis à un nombre restreint d'exigences de certification. Un tel dispositif n'a besoin d'être intégré à un aéronef que d'un point de vue mécanique et non d'un point de vue électrique ou informatique et peut donc être adapté à une grande variété d'aéronefs. L'adaptation à un modèle particulier d'aéronef peut également comprendre une adaptation des paramètres permettant la détection des différents évènements détectés dans le procédé.

Afin de garantir une durée de fonctionnement en toute autonomie compatible avec une utilisation du dispositif de mesure pour mesurer le vieillissement d'un train d'atterrissage au cours de plusieurs vols de l'aéronef, la consommation énergétique du dispositif de mesure doit être limitée au strict nécessaire. A cet effet, une gestion de l'état de fonctionnement du dispositif est réalisée par une mise en œuvre en trois étapes du procédé décrit ci-dessous. Un tel procédé permet de minimiser au plus juste la consommation énergétique du dispositif en fonction des différentes phases de vol de l'aéronef. Pour cela, la fréquence d'échantillonnage des capteurs compris dans le dispositif de mesure est adaptée à chaque étape du procédé correspondant à une ou plusieurs phases de vol spécifiques.

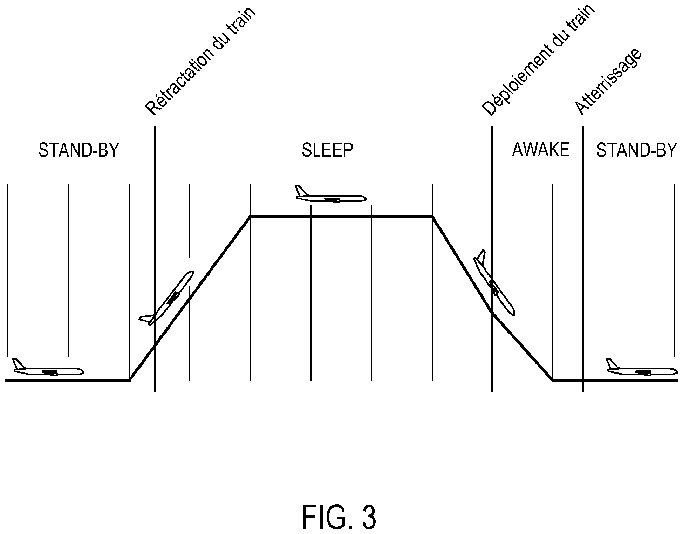

Le procédé comprend une première étape dite étape d'attente (« STAND BY »). En référence à la **figure 3****,** cette étape débute à l'issue d'un atterrissage de l'aéronef et couvre la phase au sol de l'aéronef après son atterrissage (« Ground »), y compris les phases de mouvement au sol sur les pistes d'un aéroport (« Taxi-in », « Taxi-out »), ainsi que le décollage suivant de l'aéronef (« Take-off »).

Le procédé comprend une deuxième étape dite étape de sommeil (« SLEEP »). Cette étape correspond aux phases de vol de l'aéronef dans laquelle le train d'atterrissage est rentré en position horizontale, c'est-à-dire les phases de montée (« Climb »), de croisière (« Cruise ») et de descente (« Descent ») jusqu'à ce que l'aéronef passe en phase d'approche.

Le procédé comprend une troisième étape dite étape de mesure (« AWAKE »). Cette étape couvre la phase d'approche (« Approach ») lorsque le train d'atterrissage est sorti donc en position verticale et la phase d'atterrissage elle-même (« Landing »).

La fréquence d'échantillonnage nécessaire est différente pour chacune de ces étapes. La fréquence la plus élevée est nécessaire lors de l'étape de mesure (« AWAKE ») car la phase de vol correspondant à l'atterrissage est celle qui sollicite le plus les trains d'atterrissage et nécessite donc le plus de suivi. Les phases de vol des autres étapes nécessitent principalement une fréquence de mesure suffisante pour permettre la détection d'une transition d'une étape à une autre et permettent donc une acquisition de mesures beaucoup moins fréquente.

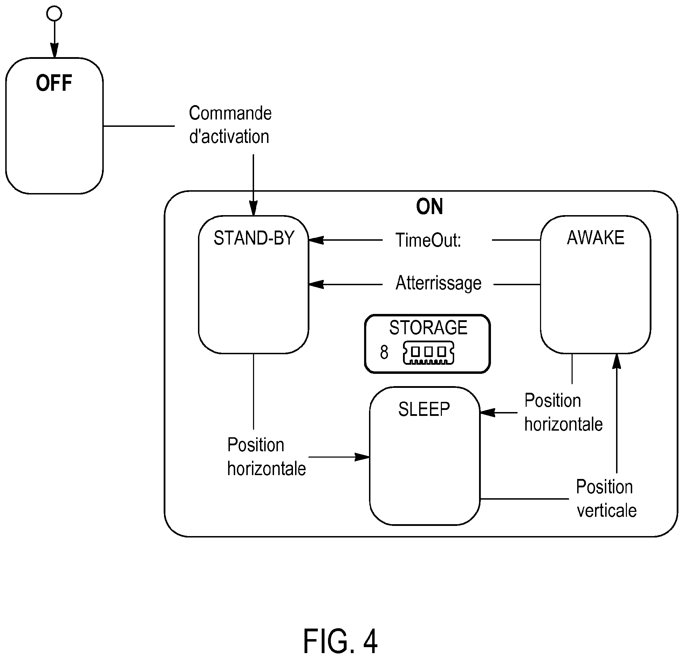

Les étapes du procédé sont décrites plus en détail dans les paragraphes suivants, en référence à la **figure 4****.**

Le procédé de surveillance comprend après un atterrissage de l'aéronef, une étape d'attente (« STAND BY ») comprenant une détection à l'aide desdits capteurs de la position du train d'atterrissage à une première fréquence d'échantillonnage tant que la position du train d'atterrissage est détectée comme verticale.
Après détection d'une position horizontale du train d'atterrissage, le procédé de surveillance comprend ensuite une étape de sommeil (« SLEEP ») comprenant une détection à l'aide desdits capteurs de la position du train d'atterrissage à au moins une deuxième fréquence d'échantillonnage, tant que la position du train d'atterrissage est détectée comme horizontale,
Après détection d'une position verticale du train d'atterrissage, le procédé de surveillance comprend ensuite une étape de mesure (« AWAKE ») comprenant à l'aide desdits capteurs une acquisition de paramètres physiques relatifs au vieillissement du train d'atterrissage et une détection d'un atterrissage de l'aéronef à une troisième fréquence d'échantillonnage jusqu'à expiration d'un délai prédéterminé après qu'un atterrissage a été détecté.

Enfin le procédé de surveillance comprend une étape de stockage (« STORAGE ») dans ladite mémoire de stockage 8 de mesures relatives au vieillissement du train d'atterrissage fonction desdits paramètres physiques mesurés.

De façon à gérer de manière optimale l'autonomie de fonctionnement du dispositif de mesure, la troisième fréquence est supérieure aux deuxièmes fréquences, elles-mêmes supérieures à la première fréquence. Les paramètres physiques peuvent ainsi être mesurés à une fréquence élevée lors de l'atterrissage lors de l'étape de mesure, puis le dispositif de mesure fonctionne à fréquence minimale jusqu'au décollage, et à une fréquence intermédiaire pendant le vol de l'aéronef de façon à ne pas rater le passage en phase d'approche, prélude à l'atterrissage.

La détection au cours de chacune de ces étapes de la position du train d'atterrissage et/ou d'un atterrissage de l'aéronef permet de détecter l'instant de transition à l'étape suivante. En effet :
- l'étape d'attente (« STAND BY ») prend fin à l'issue du décollage de l'aéronef lorsque le train d'atterrissage est rentré et donc passé en position horizontale,
- l'étape de sommeil (« SLEEP ») prend fin à l'issue de la descente lorsque le train d'atterrissage est sorti et donc passé en position verticale,
- l'étape dite étape de mesure (« AWAKE ») prend fin à l'issue de l'atterrissage de l'aéronef.

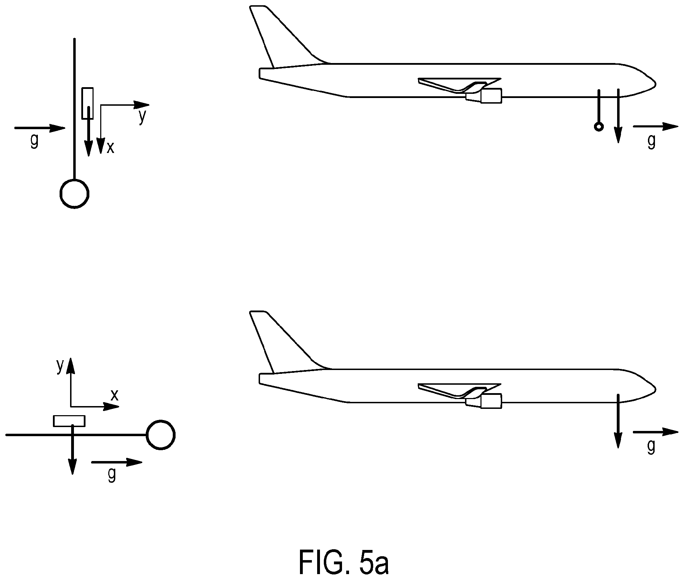

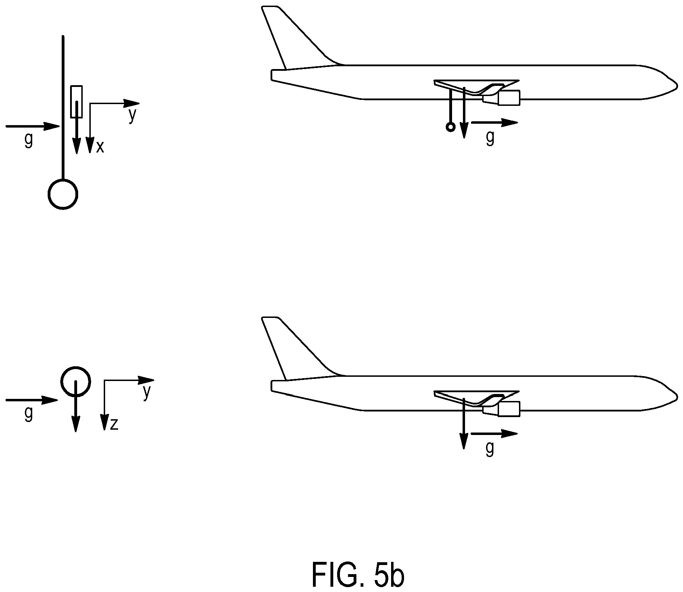

Une telle détection de la position du train d'atterrissage et/ou d'un atterrissage de l'aéronef peut être mise en œuvre par les capteurs 6 à partir de mesures des accélérations subies par le train d'atterrissage. En effet :
- l'atterrissage est caractérisé par une brusque variation de l'accélération verticale subie par le train lors du contact avec la piste,
- lorsque le train d'atterrissage est sorti, donc en position verticale, un accéléromètre positionné sur le train comme représenté en figure 5a mesurera une accélération due à la gravité environ égale à « +g », la constante de gravitation universelle, le long de l'axe x,
- lorsque le train d'atterrissage est rentré, donc en position horizontale, un accéléromètre ainsi positionné mesurera une accélération due à la gravité environ égale à « -g » le long de l'axe y dans le cas d'un train d'atterrissage avant à rétractation vers l'avant comme représenté en figure 5a, ou égale à « +g » le long de l'axe z dans le cas d'un train d'atterrissage principal à rétractation sur le côté comme représenté en figure 5b.

A la fin d'un vol, la fin de l'étape de mesure (« AWAKE ») peut entrainer le retour du procédé dans une nouvelle étape d'attente (« STAND BY »). Au cours d'une succession de vols, l'aéronef peut ainsi mettre en œuvre de manière cyclique les étapes décrites ci-dessus en mettant en œuvre au moins une fois chacune de ces trois étapes à chaque vol.

L'étape de mesure (« AWAKE ») comprend en outre une détection à la troisième fréquence d'échantillonnage de la position du train d'atterrissage et l'étape de mesure peut être mise en œuvre jusqu'à la détection d'une position horizontale du train d'atterrissage. Il est en effet possible que le train d'atterrissage soit sorti par erreur, ou bien que l'aéronef ne puisse finalement pas atterrir comme prévu, déclenchant ainsi l'étape de mesure sans que celle-ci ne soit immédiatement suivie d'un atterrissage. La détection d'une position horizontale du train d'atterrissage permet alors de mettre fin à cette étape lorsque le train d'atterrissage est rentré sans qu'un atterrissage ait eu lieu.

L'étape de mesure peut également à titre optionnel comprendre une estimation de la durée de mise en œuvre de ladite étape de mesure (« AWAKE »). L'étape d'attente (« STAND BY ») est alors mise en œuvre lorsque la durée de mise en œuvre de l'étape de mesure atteint une durée maximale prédéterminée (« TIMEOUT »). Le train d'atterrissage n'est en effet déployé usuellement que quelques minutes avant l'atterrissage. Une durée d'exécution de l'étape de mesure supérieure à une telle durée maximale, par exemple 15 minutes, est alors révélateur d'un déclenchement erroné de la mise en œuvre de cette étape, ou d'une absence de détection de l'atterrissage bien que celui-ci ait déjà eu lieu. L'étape de mesure peut alors être interrompue afin d'éviter un gaspillage inutile des ressources énergétiques du dispositif jusqu'au prochain atterrissage.

La troisième fréquence d'échantillonnage peut correspondre à la fréquence opérationnelle pour observer les vibrations, et en particulier pour observer différents pics de sollicitations successifs (pics d'énergie) ou plusieurs séquences vibratoires successives (séquences énergétiques), lors d'un atterrissage. Elle peut être à titre d'exemple dans une plage entre 100 Hz et 1 kHz selon la fréquence des phénomènes observés.

Typiquement, le calcul de vieillissement du train est calculé de la façon suivante :
Pour chaque atterrissage, on mesure sur chaque axe le choc ressenti en g (X, Y et Z), ce pour plusieurs rebonds, c'est-à-dire plusieurs pics successifs de la courbe de sollicitations, typiquement jusqu'à 5 (le terme « rebond » doit être ici compris au sens large et inclut le premier choc d'atterrissage (premier pic d'énergie) qui constitue le rebond n°1, les autres rebonds). Le choc mesuré par le capteur est obtenu par des séquences de mesure accélérométriques filtrées au travers d'un filtre (par exemple un filtre de Butterworth) pour quantifier ces chocs.

La vie du train sera ainsi mesurée de la façon résumée dans le tableau suivant:

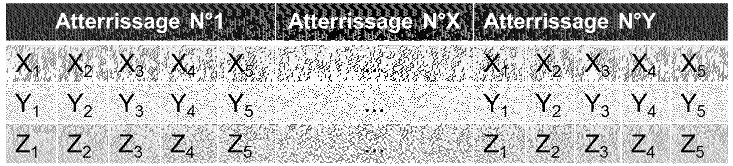

où les valeurs X1, X2... XR, Y1, Y2... YR et Z1, Z2...ZR correspondent au valeurs en g mesurées sur les trois axes, R étant compris entre 1 et 5.

Par ailleurs, une table de correspondance est définie entre l'intensité des chocs ressentis (valeur absolue) et un nombre de « cycles de vieillissement », illustré par le tableau ci-dessous :

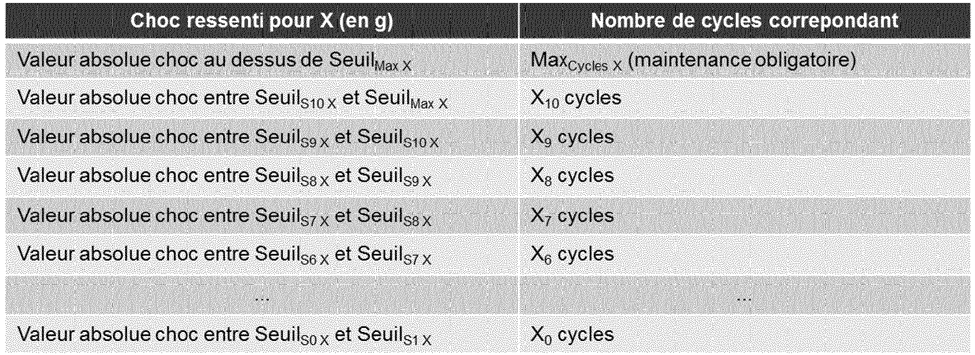

Ainsi chaque choc ressenti incrémente le nombre de cycles subis par l'équipement.

Ce suivi est réalisé sur chaque axe X, Y et Z.

La politique de maintenance peut ainsi se baser sur cet indicateur « nombre de cycles » : la totalité des cycles pour chaque atterrissage et chaque rebond est sommée pour chaque axe ; lorsque le nombre de cycles atteint un seuil donné pour l'axe en question (Max_{Cycles (X, Y ou Z)}), une alerte est déclenchée par le système, qui indique que le train nécessite une maintenance.Plusieurs deuxièmes fréquences inférieures à la troisième fréquence peuvent être employées à différents instants de l'étape de sommeil (« SLEEP »). Par exemple, la fréquence d'échantillonnage employée lors de cette étape peut être minimisée lorsqu'une altitude de vol constante est mesurée. L'atterrissage n'est en effet alors pas imminent et on peut se contenter d'une deuxième fréquence plus faible que celle devant être employée durant la descente de l'aéronef afin de ne pas rater l'ouverture du train. Une deuxième fréquence peut être à titre d'exemple dans une plage entre 1 seconde et 60 secondes. L'ouverture du train lors de la descente est alors détectée avec un retard potentiel bien inférieur au délai entre l'ouverture du train et l'atterrissage, généralement de l'ordre de quelques minutes. L'échantillonnage de l'atterrissage à la troisième fréquence d'échantillonnage est ainsi garanti, tout en minimisant durant la majeure partie du vol de l'aéronef la consommation du dispositif, maintenu dans un état de basse consommation.

Les mesures prises durant l'étape d'attente (« STAND BY ») ont uniquement pour but de surveiller le passage du train d'atterrissage de la position verticale à horizontale. Une première fréquence d'échantillonnage faible peut être employée car la position horizontale du train d'atterrissage est maintenue dans la majeure partie du vol de l'avion, en moyenne durant une durée d'au moins 2 heures. La première fréquence peut être à titre d'exemple dans une plage entre 10 et 30 minutes. Le dispositif est ainsi maintenu dans un état de très basse consommation durant la majeure partie du roulage au sol et une partie du vol de l'aéronef.

Comme représenté en figure 4, les étapes d'attente, de sommeil et de mesure peuvent être regroupées au sein d'une phase de fonctionnement active (« ON ») durant laquelle le dispositif exécute les étapes décrites ci-dessus afin de détecter et d'échantillonner les atterrissages successifs de l'aéronef sur lequel il est installé.

Préalablement à une telle phase de fonctionnement, le dispositif peut être dans une phase de stockage au cours de laquelle il n'est pas opérationnel. Dans le cas d'un dispositif comprenant un boitier scellé étanche, celui-ci peut ne pas comprendre un interrupteur de mise en marche, afin d'éviter toute interface mécanique extérieure, et doit alors être alimenté à l'issue de sa fabrication juste avant d'être scellé. Le procédé de surveillance peut alors comprendre en outre une étape d'hibernation (« OFF ») au cours de laquelle le dispositif détecte la réception d'une commande d'activation à une quatrième fréquence d'échantillonnage inférieure à ladite première fréquence. L'étape d'attente (« STAND BY ») est alors mise en œuvre suite à la détection de ladite commande. Le dispositif peut ainsi vérifier à intervalle régulier s'il a reçu une telle commande d'activation d'un dispositif externe tel que le terminal externe 4, par exemple en vérifiant si une valeur en mémoire a été modifiée par un tel dispositif externe. La quatrième fréquence d'échantillonnage peut être très faible de sorte à réduire au minimum la consommation d'énergie durant cette étape d'hibernation et à permettre le stockage du dispositif durant plusieurs années avant une utilisation opérationnelle sans épuiser sa batterie.

Dans le cas d'un dispositif de mesure comprenant un boitier principal et des capteurs distants, le boitier principal peut transmettre aux capteurs distants, en fonction des phase de vols, des commandes permettant de modifier leur état de fonctionnement pour minimiser la consommation électrique et optimiser la durée de vie de ces capteurs.

Une fois que les mesures relatives au vieillissement du train d'atterrissage sont stockées dans sa mémoire de stockage 8, le dispositif autonome 2 peut les transmettre, avec des données d'identification du train d'atterrissage le cas échéant, au terminal externe 4 via son interface de communication 5. Cette transmission permet de décharger des informations de maintenance d'un aéronef sans intervention humaine dans les meilleurs délais.

Une telle transmission peut n'être autorisée que durant l'étape d'attente (« STAND BY ») de façon à éviter un accès, nécessairement frauduleux, aux mesures lors des autres étapes du processus. Pour ce faire, l'interface de communication 5 du dispositif de mesure autonome 2 peut n'être activée que durant cette étape d'attente (« STAND BY »).

Alternativement, l'envoi d'une donnée précise (faible en volume) peut être réalisé en vol, par exemple dans le cas de transmission d'une donnée d'alerte ne pouvant attendre la prochaine étape d'attente pour être transmise.

Le procédé proposé permet ainsi de surveiller le vieillissement du train d'atterrissage d'un aéronef de manière détaillée, sans aucune connexion au système avionique de l'aéronef. La gestion fine de la consommation énergétique du dispositif proposé permet de mettre en œuvre ce procédé de manière continue sur une longue durée sans avoir besoin d'une autre source d'énergie que celle intégrée dans le dispositif lui-même.

## Revendications

1. Procédé de surveillance du vieillissement d'un train d'atterrissage (1) d'un aéronef mis en œuvre par un dispositif de mesure autonome (2) monté sur ledit train d'atterrissage (1) et comprenant :
au moins un capteur (6) configuré pour mesurer des paramètres physiques relatifs au vieillissement du train d'atterrissage et au moins un capteur (6) configuré pour détecter la position du train d'atterrissage et l'atterrissage de l'aéronef,
une mémoire de stockage (8) pour stocker des mesures relatives au vieillissement du train d'atterrissage fonction desdits paramètres physiques mesurés,
ledit procédé de surveillance comprenant :
- après un atterrissage de l'aéronef, une étape d'attente (« STAND BY ») comprenant une détection à l'aide desdits capteurs de la position du train d'atterrissage à une première fréquence d'échantillonnage tant que la position du train d'atterrissage est détectée comme verticale,
- après détection d'une position horizontale du train d'atterrissage, une étape de sommeil (« SLEEP ») comprenant une détection à l'aide desdits capteurs de la position du train d'atterrissage à au moins une deuxième fréquence d'échantillonnage, tant que la position du train d'atterrissage est détectée comme horizontale,
- après détection d'une position verticale du train d'atterrissage, une étape de mesure (« AWAKE ») comprenant à l'aide desdits capteurs une acquisition de paramètres physiques relatifs au vieillissement du train d'atterrissage et une détection d'un atterrissage de l'aéronef jusqu'à expiration d'un délai prédéterminé après qu'un atterrissage a été détecté,
ledit procédé de surveillance comprenant en outre un stockage (« STORAGE ») dans ladite mémoire de stockage (8) de mesures relatives au vieillissement du train d'atterrissage fonction desdits paramètres physiques mesurés,
les capteurs comprenant des accéléromètres aptes à mesurer les accélérations linéaires du train d'atterrissage selon trois axes dans trois directions orthogonales,
lors de l'étape de mesure (AWAKE), l'acquisition et la détection sont mises en œuvre à une troisième fréquence d'échantillonnage,
cette fréquence étant supérieure à la (ou aux) deuxième(s) fréquence(s) d'échantillonnage, ladite (ou lesdites) deuxième(s) fréquence(s) étant supérieure(s) à ladite (audites) première(s) fréquence(s),
ladite troisième fréquence étant adaptée à une mesure, par les accéléromètres, de l'intensité de chocs successifs lors d'un atterrissage, un choc ressenti étant mesuré en trois axes par les accéléromètres pour plusieurs rebonds successifs, incluant le premier choc d'atterrissage, les séquences de mesure accélérométriques étant filtrées au travers d'un filtre pour quantifier ces chocs, donnant pour chaque rebond mesuré une valeur de choc par axe en g,
les intensités ainsi mesurées étant converties en nombre de cycles de vieillissement, par une table de correspondance,
chaque choc ressenti incrémentant le nombre de cycles subis par l'équipement,
la totalité des cycles étant sommée pour chaque axe,
et en ce que lorsque le nombre de cycles atteint un seuil donné pour l'axe en question, une alerte est déclenchée.

2. Procédé selon la revendication 1 dans lequel ladite étape de mesure est mise en œuvre jusqu'à la détection d'une position horizontale du train d'atterrissage.

3. Procédé selon la revendication précédente dans lequel les paramètres physiques relatifs au vieillissement du train d'atterrissage comprennent les déformations statique et dynamique de pièces structurelles de l'aéronef, les accélérations de composants du train d'atterrissage, les pressions et températures des pneus de l'aéronef, les pressions et températures des amortisseurs de l'aéronef, la course de l'amortisseur de l'aéronef.

4. Procédé selon l'une des revendications précédentes, dans lequel lesdits capteurs détectent la position du train d'atterrissage et l'atterrissage de l'aéronef à partir de mesures des accélérations subies par le train d'atterrissage.

5. Procédé selon l'une des revendications précédentes comprenant en outre une étape d'hibernation (« OFF ») au cours de laquelle le dispositif détecte la réception d'une commande d'activation à une quatrième fréquence d'échantillonnage inférieure à ladite première fréquence et dans lequel l'étape d'attente est mise en œuvre suite à la détection de ladite commande.

6. Procédé selon l'une des revendications précédentes, dans lequel ledit dispositif de mesure comprend en outre une interface de communication, et comprenant une étape de transmission desdites mesures relatives au vieillissement du train d'atterrissage stockées dans ladite mémoire de stockage (8) à un terminal externe (4).

7. Procédé selon la revendication précédente, dans lequel ledit dispositif de mesure ne transmet lesdites mesures relatives au vieillissement du train d'atterrissage que durant l'étape d'attente.

8. Produit programme d'ordinateur comprenant des instructions de code pour l'exécution d'un procédé selon l'une quelconque des revendications précédentes lorsque ce programme est exécuté par un processeur.

9. Dispositif de mesure autonome (2) configuré pour être monté sur un train d'atterrissage (1) et comprenant :
- au moins un capteur (6) configuré pour mesurer des paramètres physiques relatifs au vieillissement du train d'atterrissage et au moins un capteur (6) configuré pour détecter la position du train d'atterrissage et l'atterrissage de l'aéronef,
- une mémoire de stockage (8) pour stocker des mesures relatives au vieillissement du train d'atterrissage fonction desdits paramètres physiques mesurés,
- ledit dispositif comprenant des accéléromètres aptes à mesurer les accélérations linéaires du train d'atterrissage selon trois axes dans trois directions orthogonales et étant configuré, une fois monté sur le train d'atterrissage, pour mettre en œuvre lesdits étapes du procédé de surveillance selon l'une quelconque des revendications 1 à 8.

10. Dispositif selon la revendication 9 comportant une source d'énergie (11) permettant d'alimenter électriquement ses composants et un gestionnaire d'énergie (10) apte à gérer les modes de consommation électrique desdits composants.

11. Système de surveillance (3) comprenant le dispositif de mesure autonome (2) selon l'une des revendications 9 ou 10 et un terminal externe (4), ledit dispositif de mesure (2) comprenant en outre une interface de communication (5) configurée pour transmettre audit terminal externe (4) les mesures relatives au vieillissement du train d'atterrissage stockées dans ladite mémoire de stockage (8).

12. Système (3) selon la revendication précédente, dans lequel l'interface de communication (5) n'est activée que durant l'étape d'attente (« STAND BY »).

13. Système (3) selon la revendication précédente, dans lequel l'interface de communication (5) est une interface RFID, NFC ou une interface de réseau cellulaire pour objets connectés.

## Patentansprüche

1. Verfahren zur Überwachung der Alterung eines Fahrwerks (1) eines Flugzeugs, das durch eine autonome Messvorrichtung (2) umgesetzt wird, die an dem Fahrwerk (1) montiert ist, und Folgendes umfassend:
mindestens einen Sensor (6), der konfiguriert ist, um physikalische Parameter in Bezug auf die Alterung des Fahrwerks zu messen und mindestens einen Sensor (6), der konfiguriert ist, um die Position des Fahrwerks und die Landung des Flugzeugs zu detektieren,
einen Ablagespeicher (8) zum Ablegen der Messungen in Bezug auf die Alterung des Fahrwerks in Abhängigkeit von den gemessenen physikalischen Parametern,
wobei das Verfahren zur Überwachung umfasst:
- nach einer Landung des Flugzeugs einen Warteschritt ("STANDBY"), umfassend eine Detektion der Position des Fahrwerks mithilfe der Sensoren mit einer ersten Stichprobenhäufigkeit solange die Position des Fahrwerks als vertikal detektiert wird,
- nach Detektion einer horizontalen Position des Fahrwerks einen Schlafschritt ("SLEEP") umfassend eine Detektion der Position des Fahrwerks mithilfe der Sensoren mit mindestens einer zweiten Stichprobenhäufigkeit, solange die Position des Fahrwerks als horizontal detektiert wird,
- nach Detektion einer vertikalen Position des Fahrwerks einen Messschritt ("AWAKE"), umfassend eine Erfassung physikalischer Parameter in Bezug auf die Alterung des Fahrwerks mithilfe der Sensoren, und eine Detektion einer Landung des Flugzeugs bis zum Ablauf einer vorbestimmten Frist, nachdem eine Landung detektiert worden ist,
wobei das Verfahren zur Überwachung weiter ein Ablegen ("STORAGE") in dem Ablagespeicher (8) von Messungen in Bezug auf die Alterung des Fahrwerks in Abhängigkeit von den gemessenen physikalischen Parametern umfasst,
wobei die Sensoren Beschleunigungsmesser umfassen, die imstande sind, die linearen Beschleunigungen des Fahrwerks entlang dreier Achsen in drei orthogonalen Richtungen zu messen,
beim Messschritt (AWAKE) die Erfassung und die Detektion mit einer dritten Stichprobenhäufigkeit umgesetzt werden,
wobei diese Häufigkeit größer als die zweite(n) Stichprobenhäufigkeit(en) ist, wobei die zweite(n) Häufigkeit(en) größer als die erste(n) Häufigkeit(en) ist (sind),
wobei die dritte Häufigkeit an eine Messung der Intensität aufeinanderfolgender Stöße bei einer Landung durch die Beschleunigungsmesser angepasst ist, wobei ein empfundener Stoß in drei Achsen für mehrere aufeinanderfolgende Rückpralle, einschließlich des ersten Landungsstoßes, durch die Beschleunigungsmesser gemessen wird, wobei die Beschleunigungsmesssequenzen durch einen Filter hindurch gefiltert werden, um diese Stöße unter Angabe für jeden gemessenen Rückprall eines Stoßwertes je Achse in g, zu quantifizieren,
wobei die so gemessenen Intensitäten durch eine Entsprechungstabelle in eine Anzahl von Alterungszyklen umgewandelt werden,
wobei jeder empfundene Stoß die Anzahl an durch die Ausrüstung erfahrenen Zyklen inkrementiert,
wobei die Gesamtheit der Zyklen für jede Achse summiert wird,
und dadurch, dass, wenn die Anzahl an Zyklen einen gegebenen Schwellenwert für die fragliche Achse erreicht, eine Warnung ausgelöst wird.

2. Verfahren nach Anspruch 1, wobei der Messschritt bis zur Detektion einer horizontalen Position des Fahrwerks umgesetzt wird.

3. Verfahren nach dem vorstehenden Anspruch, wobei die physikalischen Parameter in Bezug auf die Alterung des Fahrwerks die statischen und dynamischen Verformungen der Strukturteile des Flugzeugs, die Beschleunigungen von Komponenten des Fahrwerks, die Drücke und Temperaturen der Reifen des Flugzeugs, die Drücke und Temperaturen der Stoßdämpfer des Flugzeugs, den Hub des Stoßdämpfers des Flugzeugs umfassen.

4. Verfahren nach einem der vorstehenden Ansprüche, wobei die Sensoren die Position des Fahrwerks und die Landung des Flugzeugs ausgehend von Messungen der durch das Fahrwerk erfahrenen Beschleunigungen detektieren.

5. Verfahren nach einem der vorstehenden Ansprüche, weiter einen Ruhezustandsschritt ("OFF") umfassend, im Laufe dessen die Vorrichtung den Empfang eines Aktivierungsbefehls auf eine vierte Stichprobenhäufigkeit kleiner als die erste Häufigkeit detektiert, und wobei der Warteschritt im Anschluss an die Detektion des Befehls umgesetzt wird.

6. Verfahren nach einem der vorstehenden Ansprüche, wobei die Messvorrichtung weiter eine Kommunikationsschnittstelle umfasst, und einen Übertragungsschritt der Messungen in Bezug auf die Alterung des Fahrwerks umfassend, die in dem Ablagespeicher (8) abgelegt sind, an ein externes Endgerät (4).

7. Verfahren nach dem vorstehenden Anspruch, wobei die Messvorrichtung die Messungen in Bezug auf die Alterung des Fahrwerks nur während des Warteschritts überträgt.

8. Computerprogrammprodukt, Codeanweisungen zur Ausführung eines Verfahrens nach einem der vorstehenden Ansprüche umfassend, wenn dieses Programm durch einen Prozessor ausgeführt wird.

9. Autonome Messvorrichtung (2), die konfiguriert ist, um an einem Fahrwerk (1) montiert zu werden, und umfassend:
- mindestens einen Sensor (6), der konfiguriert ist, um physikalische Parameter in Bezug auf die Alterung des Fahrwerks zu messen und mindestens einen Sensor (6), der konfiguriert ist, um die Position des Fahrwerks und die Landung des Flugzeugs zu detektieren,
- einen Ablagespeicher (8) zum Ablegen der Messungen in Bezug auf die Alterung des Fahrwerks in Abhängigkeit von den gemessenen physikalischen Parametern,
- wobei die Vorrichtung Beschleunigungsmesser umfasst, die imstande sind, die linearen Beschleunigungen des Fahrwerks entlang dreier Achsen in drei orthogonalen Richtungen zu messen, und konfiguriert ist, um, sobald sie an dem Fahrwerk montiert ist, die Schritte des Verfahrens zur Überwachung nach einem der Ansprüche 1 bis 8 umzusetzen.

10. Vorrichtung nach Anspruch 9, die eine Energiequelle (11), die es ermöglicht, ihre Komponenten mit Strom zu versorgen und eine Energieverwaltung (10) beinhaltet, die imstande ist, die Stromverbrauchsmodi der Komponenten zu verwalten.

11. System zur Überwachung (3), umfassend die autonome Messvorrichtung (2) nach einem der Ansprüche 9 oder 10, und ein externes Endgerät (4), wobei die Messvorrichtung (2) weiter eine Kommunikationsschnittstelle (5) umfasst, die konfiguriert ist, um zu dem externen Endgerät (4) die Messungen in Bezug auf die Alterung des Fahrwerks, die in dem Ablagespeicher (8) abgelegt sind, zu übertragen.

12. System (3) nach dem vorstehenden Anspruch, wobei die Kommunikationsschnittstelle (5) nur während des Warteschritts ("STANDBY") aktiviert ist.

13. System (3) nach dem vorstehenden Anspruch, wobei die Kommunikationsschnittstelle (5) eine RFID-, NFC-Schnittstelle oder eine Schnittstelle eines Mobilfunknetzes für intelligente Objekte ist.

## Claims

1. Method for monitoring the aging of a landing gear (1) of an aircraft implemented by an autonomous measuring device (2) mounted on said landing gear (1) and comprising:
at least one sensor (6) configured for measuring physical parameters relating to the aging of the landing gear and at least one sensor (6) configured for detecting the position of the landing gear and the landing of the aircraft,
a storage memory (8) for storing measurements relating to the aging of the landing gear according to said measured physical parameters,
said monitoring method comprising:
- after a landing of the aircraft, a stand-by step ("STAND-BY") comprising detection with the aid of said sensors of the position of the landing gear at a first sampling frequency as long as the position of the landing gear is detected as vertical,
- after detection of a horizontal position of the landing gear, a sleep step ("SLEEP") comprising detection with the aid of said sensors of the position of the landing gear at least at a second sampling frequency, as long as the position of the landing gear is detected as horizontal,
- after detection of a vertical position of the landing gear, a measuring step ("AWAKE") comprising acquisition with the aid of said sensors of physical parameters relating to the aging of the landing gear and detection of a landing of the aircraft until a predetermined period has expired after a landing has been detected,
said monitoring method further comprising a storage ("STORAGE") in said storage memory (8) of measurements relating to the aging of the landing gear according to said measured physical parameters,
the sensors comprising accelerometers capable of measuring the linear accelerations of the landing gear along three axes in three orthogonal directions,
during the measuring step (AWAKE), the acquisition and detection are implemented at a third sampling frequency,
this frequency being greater than the second sampling frequency or frequencies, said second frequency or frequencies being greater than said first frequency/frequencies,
said third frequency being adapted to a measurement, by the accelerometers, of the intensity of successive shocks during a landing, a shock felt being measured in three axes by the accelerometers for multiple successive bounces including the first shock of landing, the accelerometer measurement sequences being filtered through a filter for quantifying these shocks, giving a shock value per axis in g for each measured bounce,
the intensities thus measured being converted into number of aging cycles, by a correspondence table,
each shock felt incrementing the number of cycles undergone by the equipment,
the total cycles being summed for each axis,
and in that when the number of cycles reaches a given threshold for the axis in question, an alert is triggered.

2. Method according to claim 1, wherein said measuring step is implemented until the detection of a horizontal position of the landing gear.

3. Method according to the preceding claim, wherein the physical parameters relating to the aging of the landing gear comprise the static and dynamic strains of structural parts of the aircraft, the accelerations of components of the landing gear, the pressures and temperatures of the aircraft's tires, the pressures and temperatures of the aircraft's shock struts, the travel of the aircraft's shock strut.

4. Method according to one of the preceding claims, wherein said sensors detect the position of the landing gear and the landing of the aircraft from measurements of the accelerations undergone by the landing gear.

5. Method according to one of the preceding claims further comprising a hibernation step ("OFF") during which the device detects the reception of an activation command at a fourth sampling frequency less than said first frequency and wherein the stand-by step is implemented following the detection of said command.

6. Method according to one of the preceding claims, wherein said measuring device further comprises a communication interface, and comprising a step of transmitting said measurements relating to the aging of the landing gear stored in said storage memory (8) to an external terminal (4).

7. Method according to the preceding claim, wherein said measuring device transmits said measurements relating to the aging of the landing gear only during the stand-by step.

8. Computer program product comprising code instructions for executing a method according to any one of the preceding claims when this program is executed by a processor.

9. Autonomous measuring device (2) configured for being mounted on a landing gear (1) and comprising:
- at least one sensor (6) configured for measuring physical parameters relating to the aging of the landing gear and at least one sensor (6) configured for detecting the position of the landing gear and the landing of the aircraft,
- a storage memory (8) for storing measurements relating to the aging of the landing gear according to said measured physical parameters,
- said device comprising accelerometers capable of measuring the linear accelerations of the landing gear along three axes in three orthogonal directions and being configured, once mounted on the landing gear, for implementing said steps of the monitoring method according to any one of claims 1 to 8.

10. Device according to claim 9, comprising a power source (11) for electrically powering its components and a power manager (10) capable of managing the modes of electrical consumption of said components.

11. Monitoring system (3) comprising the autonomous measuring device (2) according to one of claims 9 or 10 and an external terminal (4), said measuring device (2) further comprising a communication interface (5) configured for transmitting to said external terminal (4) the measurements relating to the aging of the landing gear stored in said storage memory (8).

12. System (3) according to the preceding claim, wherein the communication interface (5) is activated only during the stand-by step ("STAND-BY").

13. System (3) according to the preceding claim, wherein the communication interface (5) is an RFID, NFC interface or a cellular network interface for connected objects.
